(19) Europäisches Patentamt
European Patent Office
Office européen des brevets

(11) Publication number: 0 090 555 B1

(12) EUROPEAN PATENT SPECIFICATION

(45) Date of publication of patent specification: 22.10.86

(51) Int. Cl.[4]: C 08 K 5/00, C 08 K 5/36, C 08 K 5/51, C 08 L 23/02

(21) Application number: 83301495.4

(22) Date of filing: 17.03.83

# (54) Stabilising polymers.

(30) Priority: 25.03.82 GB 8208828

(43) Date of publication of application: 05.10.83 Bulletin 83/40

(45) Publication of the grant of the patent: 22.10.86 Bulletin 86/43

(84) Designated Contracting States: BE CH DE FR IT LI NL SE

(56) References cited:
GB-A-1 036 576

POLYMER DEGRADATION AND STABILITY, vol. 2, 1980, pages 309-319, Applied Science Publishers Ltd., GB.G.SCOTT et al.: "Mechanisms of antioxidant action: synergism between a 2-hydroxybenzophenone UV stabiliser and autosynergistic antioxidants in polypropylene"

(73) Proprietor: SHELL INTERNATIONALE RESEARCH MAATSCHAPPIJ B.V.
Carel van Bylandtlaan 30
NL-2596 HR Den Haag (NL)

(72) Inventor: Scott, Gerald
338 Station Road
Knowle, Solihull West Midlands (GB)
Inventor: Al-Malaika, Sahar Nadum
12 Greenway Drive Bannersgate
Sutton Coldfield Birmingham 73 (GB)

(74) Representative: Aalbers, Onno et al
P.O. Box 302
NL-2501 CH The Hague (NL)

(56) References cited:
EUROPEAN POLYMER JOURNAL, vol. 16, 1980, pages 709-714, Pergamon Press Ltd., GB., S. AL-MALAIKA et al.: "Mechanisms of antioxidant action: the role of nickel dithiolates in the stabilization of low density polyethylene"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 090 555 B1

Courier Press, Leamington Spa, England.

**Description**

This invention relates to a process for stabilising polymers such as polyolefines.

It is known that sulphur-containing compounds can be used to stabilise polyolefines. British Patent Specification No. 794,878 discloses the stabilisation of low pressure polyolefines with up to 2% w/w of a tetraalkylthiuram, e.g. tetramethylthiuram, disulphide. US Patent Specification No. 2,582,510 has a similar disclosure, but in which sulphur is used as an additional stabiliser.

Burn *et al.,* J. Inst. Petr. (1971) *57* (558) 319—330, discuss the kinetics of cumene hydroperoxide decomposition in the presence of a disulphide, "using the same reaction conditions as with zinc dithiophosphate. The results show that, at the lowest concentration employed ($2.5 \times 10^{-5}$ M), the disulphide is inactive, unlike the zinc dithiophosphate. The kinetics also show a completely different concentration effect from that obtained with the zinc dithiophosphate. Disulphide can therefore be dismissed as a key intermediate in the zinc dithiophosphate-catalysed decomposition of cumene hydroperoxide".

Howard *et al.,* Can. J. Chem. (1973) *51,* 1543—1553, discuss a study of the reaction of zinc dialkyl dithiophosphates and related compounds with peroxy radicals. They state that "it would appear that zinc dithiophosphates react with hydroperoxides to produce a more active antioxidant", but also that "there is no experimental evidence to indicate that peroxy radicals react with organosulphur compounds at the sulphur atom" and that compounds such as the disulphide $[(i\text{-}PrO)_2PS_2]_2$ "do not inhibit autoxidation or react with t-butylperoxy radicals at low temperatures".

Howard *et al.,* Can. J. Chem. (1976) *54,* 390—401, report a study of the reaction of nickel dialkyldithiocarbamates and dialkyldithiophosphates with hydroperoxides. They report that their work "has produced results which are at variance with those reported in the literature and indicates that these nickel complexes cannot be expected to function as preventive antioxidants at ambient temperature".

Al-Malaika and Scott, Eur. Polym. J. (1980) *16,* 503—509, describe the reaction of nickel dialkyldithiophosphates, and also the corresponding dithiocarbamates and xanthates, with a hydroperoxide in a solvent, in the absence of polymer. In each case, the salts first removed peroxide by one mechanism, as they are converted to disulphides; after an induction period, in which the disulphides are further oxidised, they become antioxidants acting by a different mechanism.

Al-Malaika and Scott, Eur. Polym. J. (1980) *16,* 709—714, disclose the use of nickel dithiophosphates and xanthates, and the corresponding disulphides, for the stabilisation of polyethylene, using an open or closed mixer. It is suggested that improved uv stabilisation is achieved as a result of oxidation of a disulphide. In each experiment, the amount of the sulphur-containing additive was 0.25 mmole (0.135 g nickel 0,0-dibutyl dithiophosphate) per 100 g polymer.

Although disulphides of the type described above can act as good heat stabilisers when processed as described, they provide little or no effective light-stabilising properties. It has now been found that polymers such as those of the type described can be stabilised, using known stabilisers, under commercially more attractive conditions, to give products having high stability, in particular good uv stability.

According to the present invention, a process for improving the ultra-violet stability of a thermoplastic polymer comprises mixing the polymer with a sulphur-containing compound, at at least 100°C for from 1 to 60 minutes, under conditions which cause oxidation of the compound and its conversion to an active stabilising entity, and adding an ultra-violet stabiliser to the polymer. The ultraviolet stabiliser is added before, during or after the mixing, but is added after the mixing if it is an oxidisable sulphur-containing compound.

The invention involves oxidative processing of a polymer, contrary to normal practice in industry, where every effort is made to exclude air. In the method according to the present invention, deliberate oxidation allows compounds generally thought to be poor stabilisers to be converted into very effective antioxidants. Surprisingly, it has been found that the use of a conventional uv stabiliser can act synergically with the sulphur-containing compound, even if added before mixing, whereas uv stabilisers are normally rendered ineffective by oxidation.

The sulphur-containing compound, as added to the mix, may be considered to be a precursor of the active stabilising entity, and will be referred to herein as a "precursor". One or more precursors may be used.

In general, the sulphur-containing precursor is of the type

$$X—(S)_n—Y \qquad I$$

wherein n is a positive integer and X and Y are either separate groups which may be the same or different

or are one linking, divalent group, and where preferably at least one of X and Y contains one or more atoms of sulphur. When X and Y are separate and the same, they are preferably one of

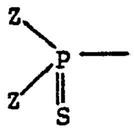
II

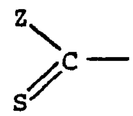
III

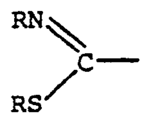
IV

or

R—
V

wherein each Z is $R_2N$— or RO— and R is alkyl, aryl, aralkyl, heteroaryl, heteroalkyl or alkenyl, any of which may bear substituents. The group or groups R may also form part of a polymer or oligomer chain or, in cases where two groups R are present in the same group X or Y, the R groups may be linked to each other by a chain of 2 to 4 carbon atoms to form a heterocyclic ring.

When X and Y are separate and different, X may be, for example, one of the groups defined above, preferably II, III or IV, while Y is of the same form but containing an R group which may be a stabilising group per se, such as 4-benzoyl-3-hydroxyphenyl. Alternatively, Y may be a uv stabilising group which yields a uv stabiliser *in situ* in the process of the invention.

When X and Y are linked, R groups in each of formulae II—V may be one, divalent, group, e.g. $C_{1-8}$ alkylene. X and Y may also be linked so that the precursor is $S_8$. n is generally 1 to 8, e.g. 1 to 4, and is preferably at least 2. The precursor is thus preferably a disulphide or other polysulphide. Examples (the second of which has an incorporated uv stabilising group) are:

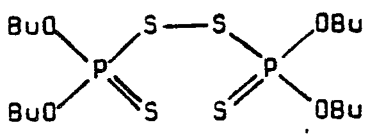
(DBDS)

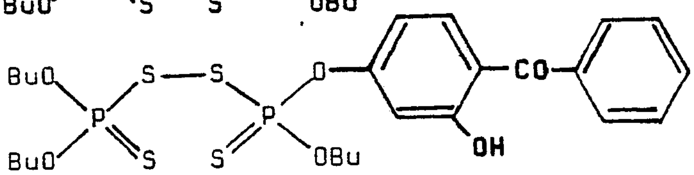

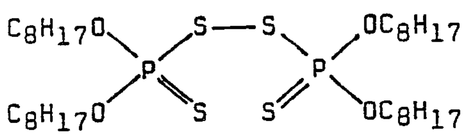
(DODS)

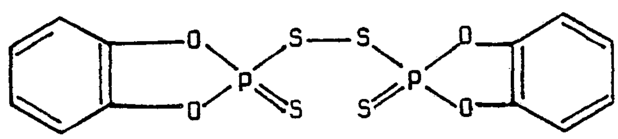

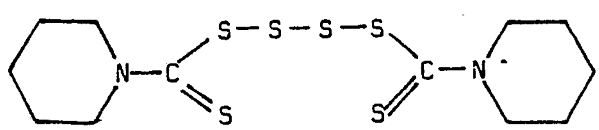

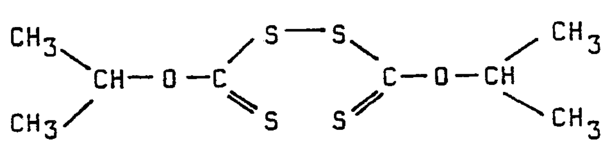

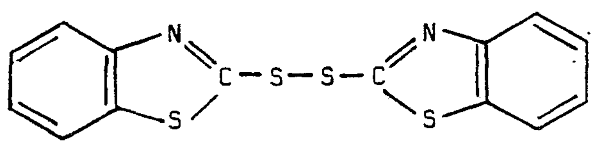

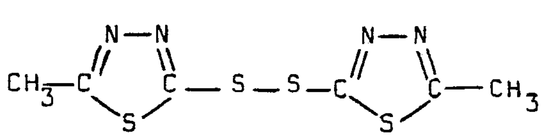

Precursor compounds such as those exemplified here may all be prepared by general methods described in the literature. For example, the dithiophosphates (containing Group II) are prepared by the series of reactions:

$$P_2S_5 \quad + \quad 4ROH \longrightarrow 2\ (RO)_2P(S)SH \quad + \quad H_2S$$

$$\xrightarrow{NH_3} 2(RO)_2P(S)SNH_4 \xrightarrow{\text{oxidation}} (RO)_2P(S){-}S{-}S{-}(S)P(OR)_2$$

and these reactions are described by Wystrack *et al.*, J. Org. Chem. (1956) *21*, 705 and Kakens *et al.*, Anal. Chem. (1955) *27*, 1062.

Dithiocarbamates and xanthates may be made by reacting $CS_2$ with either amines or alcohols to give the corresponding dithioacids which are converted to the sodium salt and oxidised. For example, the disulphides derived from the xanthates may be prepared according to the method of Whitby *et al.*, Trans. Roy. Soc. Can. (1929) *23*, 21.

Some of the dithiocarbamates are already articles of commerce used for other purposes. Disulphides, tetrasulphides and zinc or nickel salts may be obtained commercially.

An alternative procedure is to make the compound of formula I from the salt, e.g. a nickel or zinc salt, of a dithioacid by oxidation during polymer processing prior to the oxidation of the compound of formula I which produces the effective stabiliser.

Suitable polymers for use in the invention are thermoplastic polymers such as polyolefines, acrylonitrile-butadiene-styrene, ethylene-propylene-diene terpolymer, polyvinyl chloride, polystyrene and unsaturated rubbers treated before vulcanisation. Preferred polymers include polyolefines. Particularly suitable polyolefines are polyethylene and polypropylene.

The process of the invention may be conducted in various ways, in order to ensure the necessary oxidising conditions. These may be summarised as follows:

Procedure A: the precursor is mixed with the polymer and processed in a mixer open to the atmosphere, e.g. in a torque rheometer.

Procedure B: the polymer/precursor mixture is processed in a mixer which is closed for most of the mixing period but which is opened to the atmosphere for a short time during that period. This procedure is similar to A but can sometimes provide a more satisfactory degree of oxidation.

Procedure C: the polymer and precursor are mixed without contact with the atmosphere, e.g. in a closed mixer, and oxidation is achieved by including a suitable compound in the reaction mixture. Such a compound may be a radical generator such as a hydroperoxide.

Mixing is conducted for from 1 to 60 minutes. Up to 30 minutes is usually satisfactory in procedure A, while up to 20, and often no more than 10, minutes are satisfactory in procedures B and C. In procedure B, a torque rheometer may be open for only one minute of a 10 minute mixing period, the apparatus being closed during the first 5 and last 4 minutes of this period.

The temperature during mixing is at least 100, and preferably at least 150°C. In general, times and temperatures will be dependent on the nature of the polymer; typical examples are, particularly in procedure A, 30 minutes at 150°C for polyethylene and 15 minutes at 180°C for polypropylene. The same temperatures are appropriate for the same polymers in the other procedures.

The amount of precursor which is used may be chosen so that the product of the oxidative mixing procedure has the desired concentration of stabiliser. For example, the amount may be 0.01 to 5, preferably 0.03 to 3, and more preferably 0.05 to 1, % by weight of precursor, based on the weight of polymer. Such concentrations can be used particularly satisfactorily in procedure C.

In general, it is preferred that a higher concentration of precursor should be used, and that the product of the oxidative mixing is diluted with further polymer; the diluted product may contain an amount of antioxidant within the ranges given immediately above. Before dilution, the product may be termed a "masterbatch". A masterbatch preferably contains at least 0.5% by weight of the precursor, with respect to the weight of the polymer; the concentration of the precursor in the polymer, for masterbatching, is usually no more than 50, preferably no more than 30, more preferably from 1 to 20, and most preferably from 2 to 10% by weight.

If procedure C is used, suitable peroxides have a half-life of 0.1 to 400 min. at the operating temperature. Examples include cumene, *tert*-butyl and diisopropylbenzene hydroperoxides, and di-*tert*-butyl and dicumyl peroxides. The peroxide is preferably chosen so that from 0.5 to 3 g atom 0 are taken up during the mixing, per g atom S in the precursor. This range is also preferred for procedures A and B, making the latter more appropriate if controlled aeration is necessary. In either case, suitable oxidation conditions can be achieved using masterbatching under the given mixing conditions of time and temperature.

If a masterbatching technique is used, the masterbatch may be diluted with the same or different polymer as that in the masterbatch, or used to stabilise other organic materials, against oxidation. Dilution with a polymer may be conducted in a closed mixer for, example, 5 minutes.

As has been indicated above, uv stabiliser may be added before (separately from and/or chemically incorporated in the precursor), during or after the mixing. If masterbatching is used, after mixing and before dilution can be a convenient point to add uv stabiliser. Addition during the mixing is less often convenient, particularly in procedure C, although the opening of closed apparatus in procedure B allows a suitable opportunity. Nevertheless, if desired, the specified oxidative mixing period may be followed by a further processing period, e.g. of 5 minutes, following the addition of uv stabiliser. It is often preferred that part at least of the uv stabiliser should be added before the oxidative mixing period. Any other desired additives to the polymer may be included at the same time as uv stabiliser.

Any material known to have a uv stabilising effect on the polymer in question may be used in the invention. Uv stabilisers are generally well known, and examples are given in "The World Index of Polyolefin Stabilizers", ed. T. J. Henman, pub. Kogan Page, London (1982). Such compounds include 2-hydroxybenzophenones, 2-hydroxyphenylbenztriazoles, hindered phenols, hindered piperidines and nickel and zinc salts of the type described above for use as starting materials for the precursor compounds.

More than one uv stabiliser may be used. For example, one stabiliser may be added before, and another after, the oxidative mixing. Compounds which do not contain sulphur, and which cannot be oxidised to give the active antioxidants which the process of the invention gives, can be added at any stage. Compounds such as the nickel and zinc salts described above may be added after the oxidative mixing, in order to provide uv stability.

The amount of uv stabiliser used in the invention may be such that the product, after dilution if a masterbatch technique has been used, contains from 0.01 to 3, more preferably 0.1 to 1, % by weight of the uv stabiliser with respect to the weight of polymer in the product.

It is a feature of the effective antioxidants used in the invention that, unlike presently commercially available stabilisers, they are virtually non-volatile and often cannot be extracted by, for example, boiling water for 30 hours. It appears that the oxidation not only forms new antioxidants but also results in very strong association between the antioxidant and the polymer. This makes the products of the invention, not only very effective as will be apparent from the data presented below, but also more durable than currently-available stabilised polymers. The polymer products of the invention can also be colourless.

Polyethylene treated by the process of the invention can be used, for example, in greenhouse films and boat covers. Polypropylene can be treated by the process of the invention to give fibres having desirable properties. Products of the invention can also be used for garden hose, insulation for electrical (e.g. telephone) wiring, solar collectors, bottle crates, suitcases, automobile fenders, garden furniture and film for the protection of building sites.

The following Examples illustrate the invention, or are given for the purposes of comparison. Of the abbreviations used in the Examples, "DBDS" and "DODS" are sulphur-containing precursors exemplified above. "TBH" is *tert*-butyl hydroperoxide. The structures of the stabilisers which are used are as follows ("Irganox", "Cyasorb" and "Tinuvin" are registered Trade Marks):

Irganox 1010

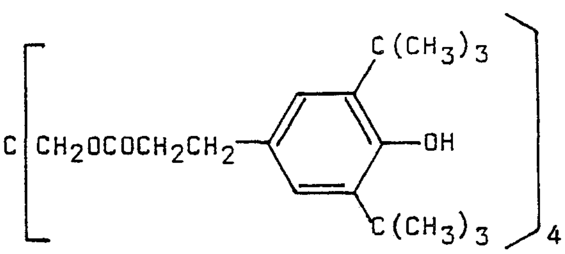

Irganox 1076

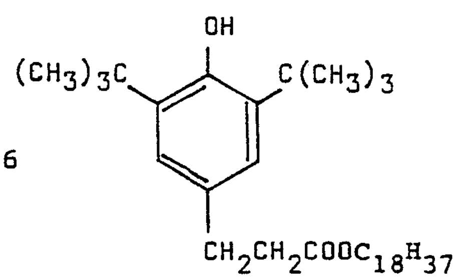

Cyasorb UV 531
HOBP

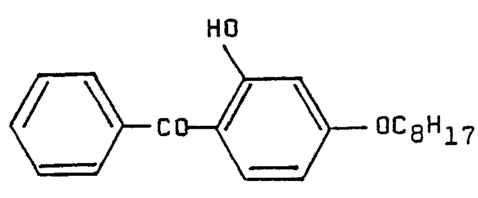

Cyasorb UV 1084

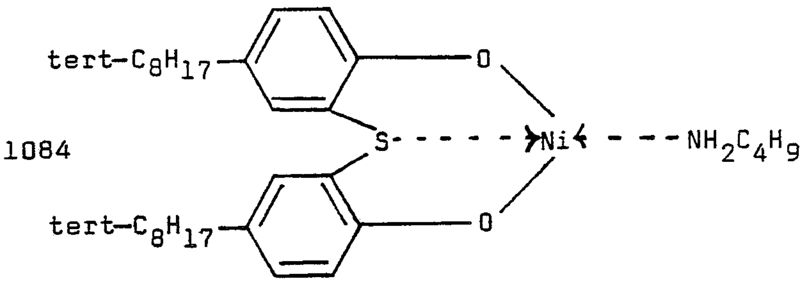

Tinuvin 326

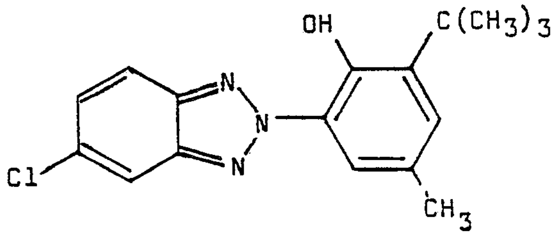

Tinuvin 770

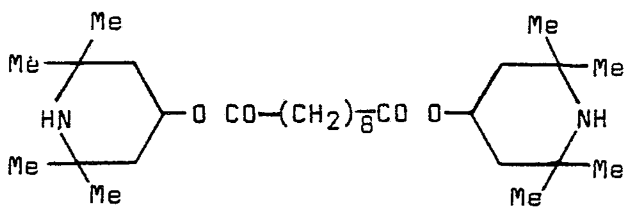

NiDSBP

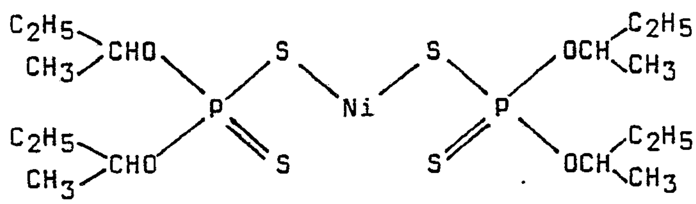

NiDOP

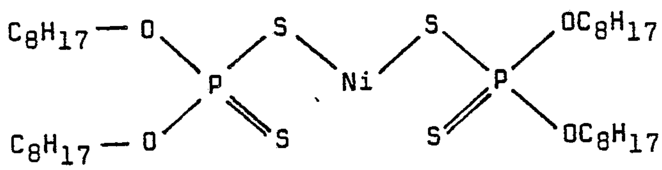

ZnDSBP

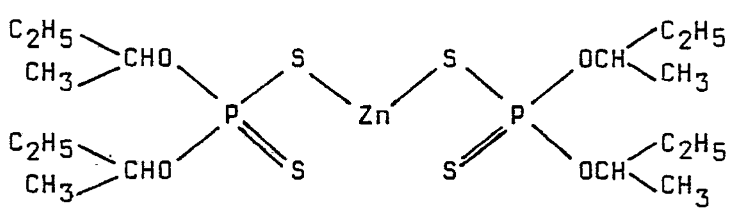

In the Examples, the main test procedures used are as follows:

Carbonyl Index and Embrittlement time

This procedure is described by Willard *et al.,* "Instrumental Methods of Analysis" 5th edition (1974) published by van Nostrand (New York). A film is irradiated in a uv cabinet and the formation of carbonyl is measured in the infra-red at 1710 $cm^{-1}$. The embrittlement time is measured by flexing samples through 180° and recording the time of irradiation (at 30°C) before they break.

Thermal Stability

The embrittlement time is measured for film held at 140°C in a circulating oven.

Melt Flow Index

The melt stability is measured in a Davenport melt indexer at 230°C under a load of 2.16 kg. The weight extruded in 10 minutes is measured.

Examples 1 and 2

Low density polyethylene was processed in an open mixer for 30 minutes at 150°C with, per 100 g thereof, 2.5 g diisopropyl dithiophosphoryl disulphide (Example 1) or isopropyl dithiocarbonyl disulphide (Example 2), and 2.5 g HOBP. When the product of each run was diluted to 0.1 g/100 g in low density polyethylene, the respective photo-embrittlement times were 5500 and 4800 hours.

When Example 1 was repeated, except that the processing was conducted in a closed mixer, the embrittlement time was 2550. A conventional combination of uv stabilisers (Cyasorbs UV 531, i.e. HOBP, and UV 1084), each used in an amount of 0.2 g per 100 g of polymer, when processed normally in a closed mixer, gave an embrittlement time of 3300 hours. A control film, without any additives, gave an embrittlement time of 1050 hours.

Example 3

Polypropylene was processed in an open mixer for 10 minutes at 180°C with 2.5 g DODS per 100 g and then diluted to 0.2 g/100 g by the addition of 0.1 g/100 g NiDOP and 0.2 g/100 g HOBP. The embrittlement time was 4200 hours.

Example 4

Polypropylene was processed in an open mixer for 15 minutes at 180°C with 2.5 g DODS and 2.5 g HOBP per 100 g, and then diluted to 0.2% (total additive concentration), with the addition of 0.2 g100 g NiDOP. The embrittlement time was more than 4250 hours.

By contrast, the conventional combination of uv stabilisers specified in the comparison to Examples 1 and 2, each used in an amount of 0.2 g/100 g of polymer, when processed normally in a closed mixer, gave uv embrittlement time of 1530 hours. A control film, without any additives, gave an embrittlement time of 90 hours.

Procedures generally similar to those of the preceding Examples were used in those reported below. If the masterbatch techniques was used, the amount of additive before oxidative mixing is given in the "masterbatch" column, and other additions are made before dilution with the same polymer and processing for 5 min. in a closed mixer (torque rheometer). Procedures A, B and C are as generally described above; in procedure A, polyethylene is oxidatively processed for 30 minutes and polypropylene for 15 minutes; in procedure B, the mixer is closed for 5 minutes, open for 1 minute and closed for 4 minutes, before dilution; procedure C is conducted for 10 minutes. Procedure N avoids deliberate oxidation, although a minor degree of oxidation can occur in batch processing. Temperatures were 150°C and 180°C for polyethylene and polypropylene, respectively. Polypropylene was used in Examples 5 to 79 and 85 to 90, polyethylene in 80 to 84. The results of these Examples are given in the following Tables.

Table 1 shows the advantages of oxidising the precursor. Table 2 shows that procedure C can be preferable to procedure A. Table 3 illustrates the superiority of the invention (3-II) over commercial stabilisation systems (3-I), and the synergism between an oxidised sulphur-containing compound and a conventional uv stabiliser. Table 4 illustrates the use of metal complexes which are apparently converted to disulphide precursors *in situ.* Table 5 illustrates the use of another precursor and, like the two previous Tables, demonstrates the advantage of incorporating at least one of the uv stabilisers in the oxidative mixing stage. Tables 6 and 7 illustrate the advantages of the invention, in terms of stabilisation measured by melt flow index and thermal stability tests. Table 8, like Table 5, illustrates the use of a complex to form the precursor, and illustrates the fact that a uv stabiliser (HOBP) alone loses activity on oxidation but becomes more effective when used in the oxidative mixing process of the present invention. Table 9 illustrates results achieved after extracting diluted masterbatch films with boiling water for 20 hours.

TABLE 1

| Ex. No. | Masterbatch | Oxidation Procedure | % w/w on Dilution | | | | Carbonyl Index at 1000 hrs. |
|---|---|---|---|---|---|---|---|
| | | | DBDS | $S_8$ | HOBP | NiDSBP | |
| 5 | 2.5% $S_8$ | A | — | 0.2 | 0.2 | 0.1 | 0.11 |
| 6 | 2,5% DBDS | A | 0.2 | — | 0.2 | 0.1 | 0.11 |
| 7 | 2.5% $S_8$ + 2.5% DBDS | A | 0.2 | 0.2 | 0.2 | 0.1 | 0.11 |
| 8 | 2.5% $S_8$ + 2.5% HOBP | A | — | 0.2 | 0.2 | 0.1 | 0.10 |
| 9 | 2.5% DBDS + 2.5% HOBP | A | 0.2 | — | 0.2 | 0.1 | 0.10 |
| | Controls | | | | | | |
| 10 | 2.5% $S_8$ | N | — | 0.2 | 0.2 | 0.1 | 0.42 |
| 11 | 2.5% DBDS | N | 0.2 | — | 0.2 | 0.1 | 0.20 |
| 12 | 2.5% $S_8$ + 2.5% HOBP | N | — | 0.2 | 0.2 | 0.1 | 0.30 |

TABLE 2

| Ex. No. | Masterbatch | Oxidation Procedure | % w/w on Dilution | | | | Carbonyl Index at 1000 hrs. | Time (hrs) to carbonyl index 0.5 | Embrittlement time (hours) |
|---|---|---|---|---|---|---|---|---|---|
| | | | DBDS | TBH | HOBP | NiDSBP | | | |
| 13 | 2.5% DBDS | A | 0.2 | | | | | 350 | 420 |
| 14 | — | C | 0.2 | 0.1 | | | | 200 | 550 |
| 15 | — | C | 0.2 | 0.2 | | | | 650 | 700 |
| 16 | — | C | 0.1 | 0.2 | | | | 500 | 650 |
| 17 | 2.5% DBDS | A | 0.2 | — | 0.2 | 0.2 | 0.045 | | |
| 18 | — | C | 0.2 | 0.2 | 0.2 | 0.2 | 0.075 | | |
| 19 | 2.5% DBDS + 2.5% HOBP | A | 0.1 | — | 0.1 | 0.1 | | 680 | 950 |
| 20 | — | C | 0.1 | 0.05 | 0.1 | 0.1 | 0.08 | | |
| 21 | — | C | 0.1 | 0.1 | 0.1 | 0.1 | 0.07 | | |
| 22 | — | C | 0.1 | 0.2 | 0.1 | 0.1 | 0.18 | | |
| 23 | 2.5% DBDS + 2.5% TBH | C | 0.2 | 0.2 | 0.2 | — | 0.08 | | |
| 24 | 2.5% DBDS + 2.5% TBH | C | 0.2 | 0.2 | 0.2 | 0.1 | 0.09 | | |
| 25 | 2.5% DBDS + 2.5% TBH | C | 0.2 | 0.2 | 0.2 | 0.2 | 0.09 | | |

TABLE 3-I

| Ex. No. | Stabiliser | Oxidation Procedure | % w/w on Dilution | | | | Embrittle-ment time (hours) |
|---|---|---|---|---|---|---|---|
| | | | DBDS | HOBP | NiDSBP | Other | |
| 26 | HOBP | N | | 0.2 | | | 400 |
| 27 | HOBP | N | | 0.3 | | | 650 |
| 28 | Cyasorb UV 1084 | N | | | | 0.2 | 445 |
| 29 | Cyasorb UV 1084 | N | | | | 0.4 | 890 |
| 30 | Tinuvin 770 | N | | | | 0.2 | 540 |
| 31 | Tinuvin 770 | N | | | | 0.4 | 900 |
| 32 | HOBP + Cyasorb UV 1084 | N | | 0.2 | | 0.2 | 1520 |
| 33 | DBDS | N | 0.1 | | | | 220 |
| 34 | DBDS | N | 0.15 | | | | 240 |
| 35 | DBDS | N | 0.2 | | | | 280 |
| 36 | Ni DSBP | N | | | 0.1 | | 1050 |
| 37 | Ni DSBP | N | | | 0.15 | | 1500 |
| 38 | Ni DOP | N | | | | 0.2 | 750 |

TABLE 3-II

| Ex. No. | Masterbatch | Oxidation Procedure | % w/w on Dilution | | | Embrittle-ment time (hours) |
|---|---|---|---|---|---|---|
| | | | DBDS | HOBP | NiDSBP | |
| 39 | 2.5% DBDS + 5% HOBP + 2.5% NiDSBP | B | 0.15 | 0.3 | 0.15 | >5000 |
| 40 | 2.5% DBDS | N | 0.15 | 0.3 | 0.15 | 2900 |
| 41 | 2.5% DBDS + 2.5% | A | 0.1 | 0.2 | 0.2 | 2800 |
| 42 | 2.5% DBDS + 5% HOBP | A | 0.1 | 0.2 | 0.2 | 3150 |
| 43 | 2.5% DBDS + 5% HOBP | N | 0.1 | 0.2 | 0.2 | 2000 |
| 44 | 2.5% DBDS + 5% HOBP | N | 0.1 | 0.2 | 0.1 | 2100 |
| 45 | 2.5% DBDS + 5% HOBP + 2.5% NiDSBP | B | 0.1 | 0.2 | 0.1 | >4500 |
| 46 | 2.5% DBDS | A | 0.2 | 0.2 | 0.1 | 2800 |
| 47 | 2.5% DBDS | N | 0.1 | 0.2 | 0.1 | 1500 |

TABLE 4

| Ex. No. | Masterbatch | Oxidation Procedure | % w/w on Dilution | | | Carbonyl Index at 1000 hrs. |
|---|---|---|---|---|---|---|
| | | | ZnDSBP | HOBP | NiDSBP | |
| 48 | 2.5% ZnDSBP | A | 0.2 | 0.2 | 0.1 | 0.12 |
| 49 | 2.5% ZnDSBP | N | 0.2 | 0.2 | 0.1 | 0.15 |
| 50 | 2.5% ZnDSBP + 2.5% HOBP | A | 0.2 | 0.2 | 0.1 | 0.06 |
| 51 | 2.5% ZnDSBP + 2.5% HOBP | N | 0.2 | 0.2 | 0.1 | 0.08 |

TABLE 5

| Ex. No. | Masterbatch | Oxidation Procedure | % w/w on Dilution | | | Carbonyl Index at 1000 hrs. |
|---|---|---|---|---|---|---|
| | | | DODS | HOBP | NiDOP | |
| 52 | 2.5% DODS | A | 0.2 | 0.2 | 0.2 | 0.060 |
| 53 | 5% DODS | A | 0.2 | 0.2 | 0.2 | 0.075 |
| 54 | 10% DODS | A | 0.2 | 0.2 | 0.2 | 0.085 |
| 55 | 2.5% DODS + 2.5% HOBP | A | 0.2 | 0.2 | 0.2 | 0.045 |

TABLE 6

| Ex. No. | Masterbatch | Oxidation Procedure | % w/w on Dilution | | | | Embrittlement time (hours) | Melt flow index |
|---|---|---|---|---|---|---|---|---|
| | | | DBDS | HOBP | NiDSBP | Others | | |
| 56 | No additive | N | | | | | 90 | 0.81 |
| 57 | Irganox 1076 | N | | | | 0.2 | 325 | 0.39 |
| 58 | Irganox 1076 | N | | | | 0.4 | 350 | 0.35 |
| 59 | 2.5% DBDS + 5% HOPB + 2.5% NiDSBP | B | 0.15 | 0.3 | 0.15 | | >5000 | 0.29 |
| 60 | 2.5% DBDS + 5% HOBP + 2.5% NiDSBP | B | 0.1 | 0.2 | 0.1 | | >3500 | 0.27 |
| 61 | 2.5% DBDS + 5% HOBP | A | 0.1 | 0.2 | 0.2 | | >3000 | 0.21 |
| 62 | 2.5% DBDS | A | 0.2 | 0.2 | 0.1 | | 2800 | 0.31 |
| 63 | 2.5% DBDS | A | 0.2 | | | | 420 | 0.34 |
| 64 | 20% DBDS | A | 0.2 | | | | 330 | 0.37 |
| 65 | 2.5% $S_8$ | A | | | | 0.2 | 480 | 0.34 |

TABLE 7

| Ex. No. | Masterbatch | Oxidation Procedure | % w/w on Dilution | | | Embrittlement time (hours) |
|---|---|---|---|---|---|---|
| | | | DODS | HOBP | NiDOP | |
| 66 | 2.5% DODS | A | 0.2 | 0.2 | 0.2 | 40 |
| 67 | 2.5% DODS + 5% HOBP | A | 0.13 | 0.27 | 0.2 | 65 |
| 68 | 5% DODS | A | 0.2 | 0.2 | 0.2 | 65 |
| 69 | 2.5% DODS + 2.5% HOBP | A | 0.2 | 0.2 | 0.2 | 65 |
| | Controls | | Irg. | Cy. | Other | |
| 70 | No addition | N | | | | 1 |
| 71 | Irganox 1076 | N | 0.2 | | | 60 |
| 72 | Irganox 1076 | N | 0.4 | | | 92 |
| 73 | Irganox 1010 | N | 0.2 | | | 48 |
| 74 | Irganox 1010 | N | 0.4 | | | 54 |
| 75 | Cyasorb UV 1084 | N | | 0.2 | | 12 |
| 76 | Cyasorb UV 1084 | N | | 0.4 | | 28 |
| 77 | Irganox 1076 + HOBP | N | 0.2 | 0.2 | | 60 |
| 78 | Irganox 1076 + Tinuvin 770 | N | 0.2 | | 0.2 | 12 |
| 79 | Cyasorb UV 1084 + HOBP | N | | 0.2 | 0.2 | 16 |

TABLE 8

Additives each $2.5 \times 10^{-4}$ moles per 100g.

| Ex No. | Additive | Oxidation procedure | (Time (hours) to carbonyl Index 8.0 |
|---|---|---|---|
| 80 | None | A | 180 |
| 81 | HOBP | A | 290 |
| 82 | HOBP | N | 820 |
| 83 | NiDSBP | A | 1550 |
| 84 | NiDSBP and HOBP | A | 2520 |

TABLE 9

| Ex. No. | Masterbatch | Oxidation Procedure | % w/w on Dilution DBDS | HOBP | NiDSBP | Tin. | Carbonyl Index at 750 hrs. | Embrittlement time (hours) |
|---|---|---|---|---|---|---|---|---|
| 85 | 2.5% DBDS | A | 0.2 | 0.2 | 0.1 | | 0.10 | |
| 86 | 2.5% DBDS | A | 0.1 | 0.2 | 0.1 | | 0.10 | |
| 87 | 2.5% DBDS + 5% HOBP | A | 0.1 | 0.2 | 0.2 | | 0.09 | |
| 88 | 2.5% DBDS + 5% HOBP + 2.5% NiDSBP | B | 0.1 | 0.2 | 0.1 | | 0.07 | |
| 89 | 2.5% DBDS + 5% HOBP + 2.5% NiDSBP | B | 0.15 | 0.3 | 0.15 | | 0.06 | |
| | Control | | | | | | | |
| 90 | Tinuvin 770 | N | | | | 0.2 | 055 (at 350 hrs) | 350 |

**Claims**

1. A process for improving the ultra-violet stability of a thermoplastic polymer, which comprises mixing the polymer with a sulphur-containing compound at at least 100°C for from 1 to 60 minutes, under conditions which cause oxidation of the sulphur-containing compound and its conversion to an active stabilising entity, and adding an ultra-violet stabiliser to the polymer before, during or after the mixing, provided that the ultra-violet stabiliser is added after the mixing if it is an oxidisable sulphur-containing compound.

2. A process according to claim 1, in which the mixing is conducted in closed apparatus in the presence of a hydroperoxide.

3. A process according to claim 1, in which the mixing is conducted in apparatus open to the atmosphere.

4. A process according to any preceding claim, in which the mixture comprises at least 0.5% by weight of the sulphur-containing compound, based on the weight of the polymer, and the product of the oxidative mixing is diluted with polymer which has not been so treated.

5. A process according to any preceding claim, in which the sulphur-containing compound is used in an amount of from 0.05 to 1% w/w of the polymer product (after any dilution with untreated polymer).

6. A process according to any preceding claim, in which the sulphur-containing compound has the formula

$$X—(S)_n—Y$$

wherein n is from 2 to 8, and X and Y are either separate groups which are the same or different, at least one of which contains one or more sulphur atoms, or are one linking, divalent group.

7. A process according to any preceding claim, in which part at least of the ultra-violet stabiliser is added before the mixing.

8. A process according to claim 7, in which the ultra-violet stabiliser is chemically incorporated in the sulphur-containing compound.

9. A process according to any preceding claim, in which the ultra-violet stabiliser is used in an amount from 0.1 to 1% w/w of the polymer product (after any dilution with untreated polymer).

10. A process according to any preceding claim, in which the polymer is polyethylene or polypropylene.

11. A process according to any preceding claim, in which more than one ultra-violet stabiliser is used.

12. A process according to claim 11, in which one of the ultra-violet stabilisers is a nickel complex or salt of a sulphur-containing compound.

**Patentansprüche**

1. Verfahren zum Verbessern der UV-Stabilität eines thermoplastischen Polymers, dadurch gekennzeichnet, daß es die Merkmale umfaßt, daß man das Polymer mit einer Schwefelhaltigen Verbindung bei mindestens 100°C 1 bis 60 min unter Bedingungen mischt, die eine Oxidation der

schwefelhaltigen Verbindung und deren Umwandlung in ein aktives, stabilisierendes Material verursachen, und man dem Polymer vor, während oder nach dem Mischen einen UV-Stabilisator zugefügt, unter der Bedingung, daß der UV-Stabilisator nach dem Mischen zugefügt wird, wenn er eine oxidierbare, schwefelhaltige Verbindung ist.

2. Verfahren nach Anspruch 1, in welchem das Mischen in einer geschlossenen Vorrichtung in Anwesenheit eines Hydroperoxids erfolgt.

3. Verfahren nach Anspruch 1, in welchem das Mischen in einer gegen die Atmosphäre offenen Vorrichtung erfolgt.

4. Verfahren nach irgendeinem vorhergehenden Anspruch, in welchem die Mischung mindestens 0,5 Gew.-% der schwefelhaltigen Verbindung, bezogen auf das Gewicht des Polymers, umfaßt, und das Produkt des oxidativen Mischens mit Polymer, das nicht in dieser Weise behandelt worden ist, verdünnt wird.

5. Verfahren nach irgendeinem vorhergehenden Anspruch, in welchem die schwefelhaltige Verbindung in einer Menge von 0,05 bis 1% Gew./Gew. des Polymerproduktes (nach irgendwelcher Vedünnung mit unbehandeltem Polymer) verwendet wird.

6. Verfahren nach irgendeinem vorhergehenden Anspruch, in welchem die schwefelhaltige Verbindung die Formel

$$X—(S)_n—Y$$

hat, worin n = 2 bis 8 ist, und X und Y entweder getrennte Gruppen, die gleich oder verschieden sind, darstellen, wobei mindestens eine derselben 1 oder mehrere Schwefelatome enthält, oder sie sind eine verbindende, zweiwertige Gruppe.

7. Verfahren nach irgendeinem vorhergehenden Anspruch, in welchem mindestens ein Teil des UV-Stabilisators vor dem Mischen zugefügt wird.

8. Verfahren nach Anspruch 7, in welchem der UV-stabilisator chemisch in die schwefelhaltige Verbindung einverleibt ist.

9. Verfahren nach irgendeinem vorhergehenden Anspruch, in welchem der UV-Stabilisator in einer Menge von 0,1 bis 1% Gew./Gew. des Polymerproduktes (nach irgendeiner Verdünnung mit unbehandeltem Polymer) verwendet wird.

10. Verfahren nach irgendeinem vorhergehenden Anspruch, in welchem das Polymer Polyethylene oder Polypropylen ist.

11. Verfahren nach irgendeinem vorhergehenden Anspruch, in welchem mehr als 1 UV-Stabilisator verwendet wird.

12. Verfahren nach Anspruch 11, in welchem einer der UV-Stabilisatoren ein Nickelkomplex oder ein Salz einer schwefelhaltigen Verbindung ist.

**Revendications**

1. Procédé pour améliorer la stabilité aux ultraviolets d'un polymère thermoplastique, qui consiste à mélanger le polymère avec un composé soufré à au moins 100°C pendant 1 à 60 min, dans des conditions qui provoquent l'oxydation du composé soufré et sa conversion en une substance stabilisante active, et à ajouter un stabilisant anti-UV au polymère avant, pendant ou après le mélange, à la condition que le stabilisant anti-UV soit ajouté après le mélange si c'est un composé soufré oxydable.

2. Procédé selon la revendication 1, dans lequel le mélange est effectué dans un appareil fermé en présence d'un hydroperoxyde.

3. Procédé selon la revendication 1, dans lequel le mélange est effectué dans un appareil ouvert à l'atmosphère.

4. Procédé selon l'une quelconque des revendications précédentes, dans lequel le mélange comprend au moins 0,5% en poids du composé soufré, par rapport au poids du polymère, et on dilue le produit du mélange oxydant par le polymère qui n'a pas été ainsi traité.

5. Procédé selon l'une quelconque des revendications précédentes, dans lequel on utilise le composé soufré en quantité de 0,05 à 1% en poids par rapport au polymère (après dilution éventuelle par le polymère non traité).

6. Procédé selon l'une quelconque des revendications précédentes, dans lequel le composé soufré répond à la formule

$$X—(S)_n—Y$$

dans laquelle n est un nombre de 2 à 8 et X et Y sont soit des groupes séparés qui peuvent être identiques ou différents, dont l'un au moins contient un ou plusieurs atomes de soufre, soit, pris ensemble, un groupe divalent de liaison.

7. Procédé selon l'une quelconque des revendications précédentes, dans lequel une partie au moins du stabilisant anti-UV est ajoutée avant le mélange.

8. Procédé selon la revendication 7, dans lequel le stabilisant anti-UV est incorporé chimiquement dans le composé soufré.

9. Procédé selon l'une quelconque des revendications précédentes, dans lequel le stabilisant anti-UV est utilisé en quantité de 0,1 1% en poids par rapport au polymère, après dilution éventuelle par le polymère non traité.

10. Procédé selon l'une quelconque des revendications précédentes, dans lequel le polymère est le polyéthylène ou le polypropylène.

11. Procédé selon l'une quelconque des revendications précédentes, dans lequel on utilise plus d'un stabilisant anti-UV.

12. Procédé selon la revendication 11, dans lequel l'un des stabilisants anti-UV est un sel ou complexe de nickel d'un composé soufré.